(19) **Europäisches Patentamt / European Patent Office / Office européen des brevets**

(11) **EP 2 174 761 B1**

(12) **EUROPEAN PATENT SPECIFICATION**

(45) Date of publication and mention
of the grant of the patent:
**18.05.2011 Bulletin 2011/20**

(51) Int Cl.:
***B28B 13/02*** *(2006.01)*    ***C04B 33/04*** *(2006.01)*

(21) Application number: **09169478.6**

(22) Date of filing: **04.09.2009**

(54) **Method for the pneumatic transport of atomized slip in the ceramics industry**

Verfahren zum pneumatischen Transport atomisierter Schlämme in der Keramikindustrie

Procédé pour le transport pneumatique d'une barbotine atomisée dans l'industrie céramique

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.09.2008 IT GE20080074**

(43) Date of publication of application:
**14.04.2010 Bulletin 2010/15**

(73) Proprietor: **Saccani, Cesare
40123 Bologna (IT)**

(72) Inventor: **Saccani, Cesare
40123 Bologna (IT)**

(74) Representative: **Porsia, Attilio et al
Via Caffaro 3/2
16124 Genova (IT)**

(56) References cited:
**EP-A2- 1 175 984**    **GB-A- 595 248
US-A- 1 498 630**

- **TALLERES JOIS: "Instalacion, fabricacion de azulejos y atomizados" INTERNET ARTICLE, [Online] pages 1-6, XP002565793 Retrieved from the Internet: URL:http://www.jois.es/ingles/pdf/Ceramica _azulejos-en.pdf> [retrieved on 2010-01-28]**

**EP 2 174 761 B1**

**Description**

The present invention relates to a method for the pneumatic transport of atomized slip in the ceramics industry.

Currently, transport of atomized slip in the ceramics industry is carried out by conveyor belts, which collect the material from the discharge of the spray dryer and then cover the distance to the storage silos, passing through the working environment. These operations cause a prolonged exposure of the atomized slip in the working environment, promoting the diffusion of fine particles in the environment. To overcome this drawback, very expensive suction plants are installed for collecting these fine particles. However, more often than not, these plants do not perform with the required efficiency.

The pneumatic transport of atomized slip completely solves the dust pollution problems in the working environment. However, for practical pneumatic transport of atomized slip, it is necessary to control two fundamental parameters: product wear and humidity. To ensure product integrity, it is necessary to limit both the maximum velocity of solid transport and the velocity gradient (i.e. the variation of solid velocity, in m/s, in 1 metre of pipe). As for product humidity, this can be controlled by acting on air humidity, pressure and temperature.

The main aim of the present invention is to design a method for pneumatic transport that is able to transport the atomized slip, without problems in maintaining the granulometry and with control of humidity.

The basic idea is to replace the conveyor belts, before and after the atomized slip warehouse, with pneumatic transport. In the ceramics industry, almost all transport of atomized slip is currently carried out with conveyor belts, on account of their operational simplicity and the fact that by using them, product damage is avoided. At the same time, the product on the conveyor belt is not fluidized by the air, so that the humidity parameter does not change in value significantly, instead remaining almost constant during its run.

However, there are still some significant negative characteristics. First of all, the conveyor belt is open to the atmosphere, and this permits, as already mentioned, the dispersion of fine dust in the working environment. In many cases, in a ceramic processing plant, it is enough to look back on the floor to see your footprint. Everywhere is more or less covered by a thin film of powder, and the air suction plants are normally inadequate for sucking in all the dispersed powder. It is not just a question of general cleanliness, but mainly a health problem: workers breathe in this fine dust every day. The velocity of the conveyor belt is designed on the basis of the mass flow rate of atomized slip. This velocity represents the saltation velocity for a given particle diameter. In other words, for an incoherent material (such as the atomized slip) of a defined granulometry, it is possible to find a value of velocity (the saltation velocity) above which the particles could be transported into the atmosphere (the working environment). This phenomenon of dustiness is thus directly correlated with the speed of the conveyor belt.

Another two problems, though less important, are connected with the use of conveyor belts. The first is the relatively greater size and cost, and the second is the possibility of product contamination by the environment.

To solve those problems, the cooling apparatus of US 1 498 630 - which discloses a method according to the preamble of claim 1 - uses the pneumatic conveying of ceramics. For maintaining the integrity of the atomized slips, the pneumatic conveyor requires control of the velocity and temperature as stated in claim 1.

The main phases of the atomized slip production cycle can be summarized as follows:

a) Raw material warehouse

The raw materials are mainly clay and feldspar. These materials are obtained from various parts of the world; in the last decade or so, around 50% has been received respectively from Turkey and Ukraine. The average lump size for clay is between 10 and 20 cm, while for feldspar it is between 2 and 5 cm. There are several types of clay, and many more of feldspar, which are mixed together to form the secret blend for every product.

b) Grinding

In this phase, a mixture of raw materials and water is poured into mills, obtaining a slip of specific granulometry, depending on the characteristics of the final product. It is possible to carry out dry grinding, but in a mixture comprising more than four components, the use of water is recommended to obtain better product homogeneity. There are continuous mills and batch mills: selection is a balance between performance and cost.

The slip is stored in special tanks, equipped with a stirrer for maintaining the homogeneity and suspension of the solids in the product, while waiting for the slip to be used in a spray dryer.

c) Spray dryer

The slip is fed by plunger pumps into a spray dryer. The particles of slip are dried by a hot air flow entering at constant velocity: a uniform-density flow finely balanced in the two phases (air and solid) is conveyed around the central axis of the spray dryer, whose output is atomized slip between 100 and 600 $\mu$m in size. The particles are very fragile and hollow.

d) Conveyor belts, atomized slip warehouse, and pressing

Conveying of the atomized slip between the spray dryer and the warehouse, and between the warehouse and the presses represents the most problematic phase of the manufacturing cycle. In fact, the use of conveyor belts necessarily implies the introduction of fine powder into the atmosphere.

The great advantages of using conveyor belts are the low velocity and absence of relative velocity between solid and air. These aspects, respectively, make it possible to avoid damaging and drying the product.

Similar problems are encountered in the second conveying of the atomized slip, between the warehouse and the presses. This last process is mainly carried out by hydraulic presses that guarantee reliability, quickness, and ease of use.

e) Moulds - drying - glazing - firing - palletizing

All these phases take place on the same line, and they contribute to differentiation of the final product in terms of mechanical characteristics, dimensions and decorative details.

For developing the method according to the present invention, the pneumatic transport of atomized slip was verified based on analysis of a real plant, selected in a ceramics works in the Emilia Romagna region. Three spray dryers (called ATMs) are installed at this plant. ATM1 and ATM2 have a mass flow rate of about 8 t/h each, while that of ATM3 is about 30 t/h.

Each conveyor belt circuit was measured (length, slope and mass flow rate) in order to identify the most difficult situation, to produce a design that could be used for each individual conveying section.

The pneumatic conveyor equipment was designed using the TPSimWin simulation software. The parameters for input to TPSimWin are: bend friction coefficient, straight friction coefficient, and equivalent fluid-dynamic diameter of the product. These three values were evaluated using the experimental pneumatic conveyor plant for the characterization of incoherent solids that is located at a works in the Emilia Romagna region.

The characteristic values of the atomized slip were:

♦ bend friction coefficient: 0.4
♦ straight friction coefficient: 0.00004
♦ product equivalent average diameter: 0.093 mm

Based on analysis of the simulation results, it was demonstrated that pneumatic transport of atomized slip is compatible with a velocity of solids transport less than approx. 7 m/s and with a velocity gradient (average over 20-30 cm sections) up to approx. 8 s$^{-1}$, without damaging or degrading the particles. At this point, the relative humidity of the air $\varphi$ is the last parameter to be verified. The relative humidity of an air-water mixture is defined as the ratio of the partial pressure of the water vapour in the mixture to the saturated vapour pressure of water, at a given temperature. For the compressor inlet, standard air conditions are assumed ($t_1 = 20°C$, $p_1 = 1$ bar, $\varphi_1 = 80\%$), and the saturated vapour pressure in these conditions, $ps_1$, can be found in the technical literature. The steam content $x_1$ is equal to 0.012 (kg of steam in 1 kg of dry air). The value of x can be found from equation 1.

$$x = 0.622 \, \varphi \, p_s \, (t) / (p - \varphi \, p_s \, (t)) \qquad (1)$$

The pressure losses and other fluid-dynamic parameters between the spray drying and the atomized slip warehouse, and between the latter and the pressing station, were calculated with the TPSimWin simulation software. It was therefore necessary to increase the air pressure from 1 to 2 bar. A temperature at compressor outlet of approx. 115°C was estimated from the technical literature, assuming a required air volume flow rate, $q_a$, equal to 500 Nm$^3$/h (i.e. a mass flow rate of 650 kg/h). At this temperature, the relative humidity of the air is very low, whereas the vapour content $x_2$ is still the same. The relative humidity of the air $\varphi_2$ could then be found from equation (1) and is equal to 4.4%. This is an unacceptable value for slip conveying because at this relative humidity the air tends to humidify by removing water from the atomized slip. After compression, it is therefore necessary to cool the air by humidification, both to reduce the air temperature and to increase the steam content. The temperature of the atomized slip at spray dryer outlet is approx. 75°C; the first possible approach is to humidify the air until this temperature is reached. Equation 2 describes the humidification process, where r is the specific heat of evaporation of water, which is a function of the temperature,

while $C_{pa}$ is the specific heat of the air.

$$c_{pa}t_2 + x_2\, r_2 = c_{pa}\, t_3 + x_3\, r_3 \qquad (2)$$

After the humidification process, the relative humidity of the air $\varphi_3$ is 21%, and the steam content $x_3$ is 0.026 kg per kg of dry air. Once again, the value is too low. The next option envisages humidifying the air up to saturation. In these conditions, the air temperature after complete humidification, $t_3$, is 48°C, calculated by an iterative method based on the above equation (2). The steam content $x_3$ is equal to 0.037 kg per kg of dry air. The saturated air, now at 48°C, must be mixed with the atomized slip at 75°C. The mass flow rate of the atomized slip is 30 000 kg/h, and the normal values of humidity $H_s$ (i.e. the ratio of the mass of water contained in the atomized slip to the total mass of the slip) are in the range 4.5-7%. The average value of the mass flow rate of water in the slip transported will then be around 1740 kg/h. When the saturated air is mixed with the atomized slip, the air is heated rapidly, and the final equilibrium temperature becomes very close to the initial temperature of the atomized slip, on account of the high mixture ratio, m, which is approx. 61. Thus, even with complete humidification, after mixing with the atomized slip, the final relative humidity of the air, $\varphi_3$, is approx. 25-30%. The temperature drop along the pipeline is subject to the influence of numerous parameters, such as the ambient air temperature and the thermal insulation of the pipeline. Assuming a temperature drop of approx. 15°C, a final temperature $t_4$ of 60°C and a final pressure $p_4$ of 1 bar can be estimated. Assuming constant steam content of the air along the pneumatic transport lines (i.e. $x_4 = x_3 = 0.037$), the relative humidity of the air at the end of transport is $\varphi_4 = 28.2\%$ (according to equation 1). In these conditions, the air tends to humidify by removing water from the atomized slip. In reality, with $\varphi_3 = 30\%$ and $t_3 = 75°C$, the water removed from the atomized slip by the air constitutes a small percentage of the total. In the worst hypothesis of complete humidification of the conveying air with water released from the atomized slip, the steam content $x_4$ would be equal to 0.153 kg/kg. Approximately 75 kg/h of water could be removed from the atomized slip by the air; in absolute terms, this value corresponds to a 0.25% reduction in humidity $H_s$ of the atomized slip (4-0.25% ÷ 7-0.25%). On the other hand, even if the total water released from the slip is not very great, it could represent a problem if the removal of water were concentrated, with the risk of localized drying of the atomized slip. It was then found that thermal preconditioning of the atomized slip and of the conveying air (i.e. before transport or in the first metres of the transfer line) is a possible solution for avoiding saturation of the air during transport. Assuming absence of variations in steam content (i.e. $x_4 = x_3 = 0.037$ kg per kg of dry air), using equation (1) it is possible to calculate the final saturated vapour pressure, $p_{s4}$, to which the condition of saturation of the air corresponds. The calculated steam saturation pressure, $p_{s4}$, corresponds to a final temperature $t_4$ of 35°C. Accordingly, if the final temperature is set to this value, the variation in the steam content of the air between inlet and outlet of the pneumatic conveyor would be zero. What is not avoided, however, is the fluctuation in steam content: to obtain this, the temperature must be controlled not only at the end of the conveying pipelines, but along the entire length of the pipeline. In fact, an increase in steam content in the conveying air is only possible if its relative humidity is below 100%, while a decrease in steam content is only possible if the temperature or the pressure drop below the dew point, causing condensation of the steam. The relative humidity of the air depends on the pressure and on the temperature (equation 1); the pressure drop is known from TPSimWin, and therefore, to keep x constant and $\varphi$ in conditions of saturation, it is sufficient simply to control the temperature. It has also been found that the maximum effect of thermal conditioning should be concentrated in the very first metres of the pipeline, which is the critical point owing to a temperature drop of approx. 30°C. The technical complications are, for example, the velocity of the atomized slip (i.e. 7 m/s) and the size of the pipeline, which has a diameter of 150 mm. A possible solution is to precool the atomized slip before it enters the pneumatic conveyor. For example, by lowering the temperature of the atomized slip from 75°C to approx. 50°C, it is possible (by means of a controlled decrease in temperature) to have both a constant steam content and saturation of the air ($\varphi = 100\%$) along the entire pipeline. Therefore it is disclosed, according to the invention, that it is possible to control the humidity of the atomized slip, $H_s$, both by pre-cooling the atomized slip, and by controlling the temperature of the air-slip mixture along the pneumatic transport pipeline. Of course, the present invention is not limited to what has been described, but comprises all those variants and modifications falling within the scope of the following claims.

**Claims**

1. Method for the pneumatic transport of atomized slip in the ceramics industry, **characterized in that** it comprises the phases of:

    a. thermal preconditioning of the atomized slip;
    b. control of the temperature of the conveying air downstream from said zone of thermal preconditioning of the atomized slip, and

c. control of the velocity and of the velocity gradient relative to the axis of the flow pipe of conveying air to maintain integrity of the atomized slip in the bends and straight sections and in irregularities of the transport pipeline.

2. Method according to Claim 1, **characterized in that** said thermal preconditioning of the slip takes place either in a zone between the discharge of the atomized product from the spray dryer and the pneumatic conveyor inlet by contact with exchangers thermally conditioned by means of air or water or by fluidization processes (i.e. with direct contact between the solid and the fluid that supplies the thermal power required for exchange) or in the first fraction of the length of the pneumatic transport pipeline with suitable fins or interspaces washed with fluids at an appropriate temperature.

3. Method according to the preceding Claims 1 and/or 2, **characterized in that** said pipeline has a length of between 5 and 250 metres.

4. Method according to Claims 2 and/or 3, **characterized in that** the length of said first fraction of the conveying pipeline or the size of the thermal conditioning elements is a function of the temperature of the atomized product at spray dryer outlet and of its flow rate.

5. Method according to Claim 1, **characterized in that** said thermal preconditioning leads to a temperature change of the atomized slip until conditions are reached for which the air becomes saturated and has a defined content with respect to water vapour.

6. Method according to Claim 5, **characterized in that** the equilibrium between the temperature of the solid and the temperature, pressure and content (and hence relative humidity) of the air is determined by the need to be able to maintain the conditions of constant content and air always saturated from the beginning to the end of transport by controlling the temperature with suitable interspaces appropriately distributed along the circuit.

7. Method according to Claim 5, **characterized in that**, if the temperature of the atomized product leaving the spray dryer is, as usual, between 70 and 80°C, said temperature drop occurs from the temperature of discharge of the atomized product as far as an air temperature such as to guarantee maintenance of constant content and relative humidity throughout transport, so as to prevent any exchange of water between air and solid.

8. Method according to any one of the preceding Claims 1 to 7, **characterized in that** the maximum velocity of the atomized slip in the conveying pipeline is approx. 7 m/s and the maximum velocity gradient of the atomized slip, i.e. the variation of its velocity in m/s in one metre of pipeline, is at most approx. 8 $s^{-1}$.

9. Method according to any one of the preceding Claims 1 to 7, **characterized in that** the relative humidity of the air is kept constant along the pipeline conveying the atomized slip by controlling the temperature as a function of the pressure drop along the conveying pipeline and by thermal preconditioning of the atomized slip.

10. Method according to Claim 9, **characterized in that** in the case when the temperature conditions at the end of transport are not compatible with the process downstream, it is possible to act on the discharge pressure, by generating a counterpressure or a negative pressure, such as to permit appropriate modification of the temperature values necessary for maintaining the thermo-hygrometric conditions required for preventing undesirable variations of humidity in the atomized slip.

11. Method according to any one of the preceding claims, **characterized in that** both the content and the relative humidity of the air are kept constant, so that during transport the air does not transfer water to the solid and does not absorb water from the solid.

**Patentansprüche**

1. Verfahren zum pneumatischen Transport von atomisiertem Schlicker in der Keramikindustrie, **dadurch gekennzeichnet, dass** es die Phasen:

a. einer thermischen Voreinstellung des atomisierten Schlickers

b. einer Regelung der Temperatur der Transportluft stromabwärts von dem Bereich der thermischen Voreinstellung des atomisierten Schlickers, und

c. eine Regelung der Geschwindigkeit und des Geschwindigkeitsgradienten relativ zur Achse der Strömungsleitung der Transportluft zum Aufrechterhalten der Integrität des atomisierten Schlickers in den Biegungen und den geraden Bereichen und in Unregelmäßigkeiten der Transportpipeline aufweist.

2. Verfahren nach Anspruch 1, **dadurch gekennzeichnet, dass** die thermische Voreinstellung des Schlickers entweder in einem Bereich zwischen dem Auslass des atomisiertem Produktes vom Sprühtrockner und dem Einlass des pneumatischen Fördermittels erfolgt durch Kontaktierung mit Austauschern zur thermischen Konditionierung durch Luft oder Wasser oder durch Verflüssigungsprozesse (d.h. durch direkte Kontaktierung zwischen dem Feststoff und der Flüssigkeit, welche die thermische Energie, die zum Austausch benötigt wird, liefert) oder in einem ersten Abschnitt der Länge der pneumatischen Transportpipeline mit geeigneten Rippen oder Zwischenräumen, die mit Flüssigkeiten bei einer geeigneten Temperatur gespült werden.

3. Verfahren nach Anspruch 1 und/oder 2, **dadurch gekennzeichnet, dass** die Pipeline die Länge zwischen 5 und 250 m hat.

4. Verfahren nach den Ansprüchen 2 und/oder 3, **dadurch gekennzeichnet, dass** die Länge des ersten Abschnitts der Transportpipeline oder die Größe des thermischen Konditionierungselements eine Funktion der Temperatur des atomisierten Produktes am Sprühtrocknerauslass ist und seiner Flussrate.

5. Verfahren nach Anspruch 1, **dadurch gekennzeichnet, dass** die thermische Vorkonditionierung zu einem Temperaturwechsel des atomisiertem Schlickers führt, bis die Bedingungen erreicht sind, für welche die Luft gesättigt wird und einen definierten Anteil an Wasserdampf aufweist.

6. Verfahren nach Anspruch 5, **dadurch gekennzeichnet, dass** das Gleichgewicht zwischen der Temperatur des Feststoffes und der Temperatur dem Druck und der Zusammensetzung (und damit auch der relativen Feuchtigkeit) der Luft bestimmt ist durch das Erfordernis eine konstante Zusammensetzung zu ermöglichen und dass Luft immer gesättigt ist vom Beginn bis zum Ende des Transports durch Regulierung der Temperatur mit entsprechenden Zwischenräumen die ausreichend entlang des Kreislaufs verteilt sind.

7. Verfahren nach Anspruch 5, **dadurch gekennzeichnet, dass** die Temperatur des atomisierten Produktes, welches den Sprühtrockner verlässt, gewöhnlich zwischen 70 und 80°C liegt und ein Temperaturabfall auftritt gegenüber der Austrittstemperatur des atomisierten Produktes, sofern eine Lufttemperatur die Aufrechterhaltung einer konstanten Zusammensetzung und relativer Feuchte während des Transports garantiert, um jeglichen Austausch von Wasser zwischen der Luft und dem Feststoff zu verhindern.

8. Verfahren nach einem der vorhergehenden Ansprüche 1-7, **dadurch gekennzeichnet, dass** die Maximalgeschwindigkeit des atomisierten Schlickers in der Transportpipeline annähernd 7 m/s ist und der maximale Geschwindigkeitsgradient des atomisierten Schlickers z.B. die Variation seiner Geschwindigkeit in m/s innerhalb eines Meters der Pipeline allerhöchstens etwa 8 $s^{-1}$ beträgt.

9. Verfahren nach einem der hervorgehenden Ansprüche 1-7, **dadurch gekennzeichnet, dass** die relative Feuchtigkeit der Luft konstant entlang der Transportpipeline gehalten wird, welche den atomisierten Schlicker transportiert, durch Regeln der Temperatur als eine Funktion des Druckabfalls entlang der Transportpipeline und durch thermisches Voreinstellen des atomisierten Schlickers.

10. Verfahren nach Anspruch 9, **dadurch gekennzeichnet, dass** im Fall, dass die Temperaturbedingungen am Ende des Transports nicht kompatibel sind mit dem strömungsabwärtigen Prozess, es möglich ist, auf den Auslassdruck einzuwirken, durch Bereitstellen eines Gegendrucks oder eines Negativdrucks, um eine entsprechende Änderung der Druckwerte zu erlauben, welche notwendig zum Aufrechterhalten der thermohygrometrische Bedingungen sind, welche benötigt werden, um unerwünschte Schwankungen der Feuchtigkeit im atomisierten Schlicker zu verhindern.

11. Verfahren nach einem der vorhergehenden Ansprüche, **dadurch gekennzeichnet, dass** sowohl die Zusammensetzung als auch die relative Feuchtigkeit der Luft konstant gehalten werden, sodass während des Transports die Luft kein Wasser zum Feststoff transportiert und kein Wasser aus dem Feststoff absorbiert.

**Revendications**

1. Procédé pour le transport pneumatique d'une barbotine atomisée dans l'industrie céramique, **caractérisé en ce qu'**il comporte les phases dans lesquelles :

   a. on préconditionne thermiquement la barbotine atomisée;
   b. on règle la température de l'air de convoyage en aval de la zone de préconditionnement thermique de la barbotine atomisée, et
   c. on commande la vitesse et le gradient de vitesse par rapport à l'axe du conduit d'écoulement de l'air de convoyage, pour maintenir l'intégrité de la barbotine atomisée dans les courbures et les sections droites et dans des irrégularités la du conduit de transport.

2. Procédé suivant la revendication 1, **caractérisé en ce que** le préconditionnement thermique de la barbotine a lieu soit dans une zone entre le déchargement du produit atomisé en provenance du sécheur par pulvérisation et l'entrée du convoyeur pneumatique, par contact avec des échangeurs conditionnés thermiquement, au moyen d'air ou d'eau ou par des processus de fluidisation (c'est-à-dire avec contact direct entre le solide et le fluide qui fournit la puissance thermique nécessitée pour l'échange), ou dans la première fraction de la longueur du conduit de transport pneumatique par des ailettes ou des intervalles appropriés, lavés avec des fluides à une température appropriée.

3. Procédé suivant les revendications 1 et/ou 2 précédentes, **caractérisé en ce que** le conduit a une longueur comprise entre 5 et 250 mètres.

4. Procédé suivant les revendications 2 et/ou 3, **caractérisé en ce que** la longueur de la première fraction du conduit de convoyage ou la dimension des éléments de conditionnement thermique est fonction de la température du produit atomisé à la sortie du sécheur de pulvérisation et de son débit.

5. Procédé suivant la revendication 1, **caractérisé en ce que** le préconditionnement thermique conduit à une modification de température de la barbotine atomisée jusqu'à ce que soient atteintes des conditions pour lesquelles l'air devient saturé et a une teneur définie en vapeur d'eau.

6. Procédé suivant la revendication 5, **caractérisé en ce que** l'équilibre entre la température du solide et la température, la pression et la teneur (et par conséquent l'humidité relative) de l'air est déterminé par la nécessité d'être capable de maintenir les conditions de teneur constante et d'air toujours saturé du début à la fin du transport en réglant la température par des intervalles adaptés, répartis de manière appropriée le long du circuit.

7. Procédé suivant la revendication 5, **caractérisé en ce que** si la température du produit atomisé quittant le sécheur de pulvérisation est, comme habituellement, comprise entre 70 et 80°C, l'abaissement de la température a lieu à partir de la température de déchargement du produit atomisé jusqu'à une température de l'air, de manière à garantir le maintien de la teneur et de l'humidité relative constantes pendant tout le transport, de manière à empêcher tout échange d'eau entre l'air et le solide.

8. Procédé suivant l'une quelconque des revendications précédentes 1 à 7, **caractérisé en ce que** la vitesse maximum de la barbotine atomisée dans le conduit de convoyage est d'approximativement 7 m/s et le gradient de vitesse maximum de la barbotine atomisée, c'est-à-dire la variation de sa vitesse en m/s dans un mètre de conduit, est au plus d'approximativement $8s^{-1}$.

9. Procédé suivant l'une quelconque des revendications précédentes 1 à 7, **caractérisé en ce que** l'humidité relative de l'air est maintenue constante le long du conduit convoyant la barbotine atomisée en réglant la température en fonction de la chute de pression le long du conduit de convoyage et par préconditionnement thermique de la barbotine atomisée.

10. Procédé suivant la revendication 9, **caractérisé en ce que**, dans le cas où les conditions de température à la fin du transport ne sont pas compatibles avec le processus en aval, il est possible d'agir sur la pression de déchargement, en produisant une contrepression ou une pression négative, de manière à permettre une modification appropriée des valeurs de température nécessaires pour maintenir les conditions thermohygrométriques exigées pour empêcher des variations non souhaitables de l'humidité dans la barbotine atomisée.

11. Procédé suivant l'une quelconque des revendications précédentes, **caractérisé en ce que** à la fois la teneur et l'humidité relative de l'air sont maintenues constantes, de sorte que, pendant le transport, l'air ne transfert pas d'eau vers le solide et n'absorbe pas d'eau du solide.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1498630 A